Europäisches Patentamt

European Patent Office

Office européen des brevets

(19)

(11) Veröffentlichungsnummer: **0 294 654 B1**

(12) **EUROPÄISCHE PATENTSCHRIFT**

(45) Veröffentlichungstag der Patentschrift: **13.11.91**

(51) Int. Cl.⁵: **B64C 11/14**, F02C 7/04

(21) Anmeldenummer: 88108374.5

(22) Anmeldetag: 26.05.88

(54) **Nasenhaube aus Faserverbundwerkstoff.**

(30) Priorität: 06.06.87 DE 3719098

(43) Veröffentlichungstag der Anmeldung:
14.12.88 Patentblatt 88/50

(45) Bekanntmachung des Hinweises auf die
Patenterteilung:
13.11.91 Patentblatt 91/46

(84) Benannte Vertragsstaaten:
DE FR GB IT

(56) Entgegenhaltungen:
GB-A- 1 587 314
US-A- 2 401 247
US-A- 3 799 693

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Sikorski, Siegfried
Seitzstrasse 21
W-8000 München 22(DE)**

**Beschreibung**

Die Erfindung betrifft eine Nasenhaube aus Faserverbundwerkstoff für ein Turbotriebwerk mit der äußeren Form eines Rotationsparaboloides, die über Befestigungsschrauben mit dem Triebwerk verbunden ist. Eine solche Nasenhaube ist aus der Druckschrift "Flight International", vom 28.09.1985, Seite 24, bekannt. Bei der aus der Zeitschrift Flight vorbekannten Ausführung weist die Nasenhaube rotorseitig einen zylindrischen Abschnitt auf, an dessen Ende ein Befestigungsflansch radial nach außen gezogen und mit über dem Umfang verteilten axialen Befestigungsbohrungen versehen ist, über die sie am Rotor festgeschraubt ist.

Zur Erzielung einer aerodynamisch günstigen Form ist der zylindrische Abschnitt der Nasenhaube mit einem konischen Metallmantel abgedeckt, welcher zusammen mit der Nasenhaube am Rotor angeschraubt ist. Die Schrauben werden dabei durch entsprechende Öffnungen im Metallmantel eingeführt und festgezogen.

Diese Anordnung hat jedoch eine Reihe von Nachteilen. So muß der konische Metallmantel genügend Steifigkeit aufweisen, um sich bei Auftreffen von Fremdkörpern nicht unzulässig zu deformieren. Dafür ist eine ausreichende Wandstärke erforderlich, welche ein realtiv hohes Gewicht der gesamten Nasenhauben bedingt. Des weiteren wird der aus Faserverbundwerkstoff bestehende Teil der Nasenhauben am Knick des rotorseitigen Befestigungsflansches beim Auftreffen von Fremdkörpern ungünstig belastet. Die einzelnen Faserlagen werden durch die Stoßbelastung auseinandergezogen (delaminiert), weshalb an dieser Stelle arbeitsaufwendige Verstärkungen angebracht werden müssen, um der Gefahr von Materialversagen zu begegnen. Ein weiterer Nachteil ist die Schwierigkeit, die Nasenhaube auf dem Rotor zu zentrieren, denn die zur Verfügung stehenden Kanten und Radien weisen fertigungsbedingt relativ große Toleranzen auf. Eine Zentrierung ist aber wegen der hohen Rotordrehzahlen neuzeitlicher Turbotriebwerke erforderlich.

Aus der US-PS 24 01 247, Fig. 5, ist eine Nasenhaube der vorstehenden Bauart bekannt, deren Wandung an ihrem offenen Ende unter Umschliessung eines metallischen Ringes nach innen gezogen ist. Die Befestigung der Nasenhaube am Triebwerk erfolgt über den metallischen Ring. Dadurch ist die Belastung der Nasenhaube beim Auftreffen von Fremdkörpern nur mit weiterem baulichen Aufwand, wie z. B. eine Innenschale, in Grenzen zu halten. Hierdurch wird jedoch der bauliche Aufwand sowie das Gewicht der Nasenhaube erhöht.

Aufgabe der Erfindung ist es, eine Nasenhaube zu schaffen, welche eine günstigere Materialbelastung an den hochbeanspruchten Stellen ermöglicht, leicht zu zentrieren ist und sich durch geringes Gewicht auszeichnet.

Erfindungsgemäß wird die Aufgabe dadurch gelöst, daß die Wandung der Nasenhaube an ihrem offenen Ende unter Bildung eines Knicks nach innen gezogen ist und einen Befestigungsflansch bildet, wobei durch die Wandung im Bereich des Knicks ein metallischer Zentrierring teilweise radial und axial umschlossen wird, der die Nasenhaube auf die Triebwerkslängsachse zentriert und gleichzeitig dazu dient, daß im Falle eines Fremdkörpereinschlags auf die Nasenhaube der Faserwerkstoff im Knick auf Zug beansprucht wird.

Die wesentlichsten Vorteile der Erfindung bestehen darin, daß die Faserlagen der Nasenhaube am Befestigungsflanschknick bei Fremdkörpereinschlag aufeinandergepreßt werden und so eine gute Ausnutzung der hohen Zugfestigkeit und Reißfestigkeit des Faserwerkstoffes erreicht wird. Durch den metallischen Zentrierring werden die auftretenden Kräfte über einen größeren Bereich des Bauteils verteilt, so daß mehr Fasern zur Aufnahme der Schlagenergie herangezogen und die Wandstärke gewichtsgünstig gering ausgelegt werden kann. Der bisher erforderliche konische Metallmantel entfällt, so daß sich durch diese Maßnahme ein geringeres Gewicht der Nasenhaube erzielen läßt.

In einer bevorzugten Ausführungsform ist die Nasenhaube mit über dem Umfang verteilten Zugangsöffnungen mit eingepaßten Abdeckhülsen versehen, welche den Nasenhaubeninnenraum gegenüber den Zugangsöffnungen abdichten. Hierdurch wird verhindert, daß Wasser, Fremdkörper oder gelockerte Schrauben in den Innenraum der Nasenhauben eindringen und dort Schäden verursachen.

Eine weitere zweckmäßige Ausgestaltung der Erfindung sieht vor, daß die äußeren Faserlagen der Nasenhaube am Knick des Befestigungsflansches zur Bildung einer aerodynamisch günstigen Form gestreckt sind. Hierdurch wird erreicht, daß es im Anschlußbereich Nasenhaube - Rotor nicht zu einer ungünstigen Einkerbung mit der Folge von Strömungsablösungen kommt, sondern Nasenhaube und Rotor aerodynamisch günstig angepaßt sind. Vorteilhaft dabei ist auch, daß keine nachträglich zu befestigenden Abdeckungen angebracht werden müssen.

Vorzugsweise ist der Zentrierring radial innen mit einem definierten Zentrierradius versehen, wodurch sich die Nasenhaube auf einfache Weise bei der Befestigung am Rotor zentrieren läßt.

Anhand der beigefügten Zeichnungen wird die vorliegende Erfindung näher erläutert. Dabei zeigt:

- Fig. 1     Einen Längsschnitt durch die Nasenhaube,
- Fig. 2     Schematisch den Wirkmechanismus des Aufeinanderziehens der Faserlagen.

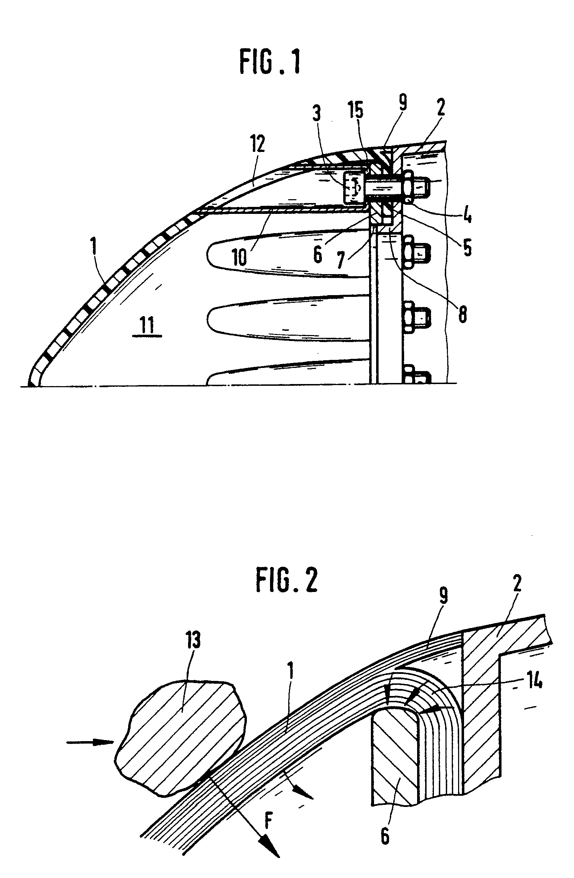

In Fig. 1 ist die Nasenhaube 1 am Rotor 2 eines nicht dargestellten Turbotriebwerkes mittels über dem Umfang verteilter Befestigungsschrauben 3 und Muttern 4 angebracht.

Die Wandung der Nasenhaube 1 ist zur Bildung eines Befestigungsflansches 5 nach innen gezogen, wobei bereits bei der Nasenhaubeherstellung der metallische Zentrierring 6 eingelegt wird. Dieser ist radial innen mit einem definierten Zentrierradius 7 versehen, in den ein entsprechend ausgebildeter Flansch 8 des Rotors 2 eingepaßt ist. Die äußeren Fasern der Nasenhauben 1 sind rotorseitig nicht mit nach innen gezogen, sondern bilden einen Mantel 9, welcher einen aerodynamisch günstigen Strömungsübergang zwischen Nasenhaube 1 und Rotor 2 ermöglichen. Die Befestigungsschrauben 5 sind von Abdeckhülsen 10 umgeben, welche eine Abdichtung des Nasenhaubeninnenraumes 11 gegenüber der Umgebung bewirken. Die Abdeckhülsen 10 sind rotorseitig mit scheibenartigen Ringflanschen 15 versehen, und über die Befestigungsschrauben 5 am Zentrierring 6 befestigt.

Am anderen Ende sind sie in entsprechenden Zugangsöffnungen 12 der Nasenhaube 1 eingepaßt und der äußeren Kontur der Nasenhaube 1 angepaßt. Die Zugangsöffnungen 12 dienen dabei dem Einführen und Festziehen der Befestigungsschrauben 5.

In Fig. 2 ist schematisch gezeigt, wie sich die Faserlagen der Nasenhaube 1 bei Auftreffen eines Fremdkörpers 13 aufeinanderziehen. Der Fremdkörper 13 übt dabei eine Kraft F auf die Nasenhaube 1 aus, und durch dessen elastische Verformung in Richtung dieser Kraft F werden im Knick 14 die Faserlagen um den Zentrierring 6 herum aufeinandergezogen, so daß hierdurch der Faserwerkstoff im Knick auf Zug beansprucht und die hohe Zugfestigkeit und Reißfestigkeit des Faserverbundwerkstoffes gut ausgenutzt wird.

## Patentansprüche

1. Nasenhaube aus Faserverbundwerkstoff für ein Turbotriebwerk mit der äußeren Form eines Rotationsparaboloides, die über Befestigungsschrauben mit dem Triebwerk verbunden ist, dadurch gekennzeichnet, daß die Wandung der Nasenhaube (1) an ihrem offenen Ende unter Bildung eines Knicks (14) nach innen gezogen ist und einen Befestigungsflansch (5) bildet, wobei durch die Wandung im Bereich des Knicks (14) ein metallischer Zentrierring (6) teilweise radial und axial umschlossen wird, der die Nasenhaube (1) auf die Triebwerks-Längsachse zentriert und gleichzeitig dazu dient, daß im Falle eines Fremdkörpereinschlags auf die Nasenhaube (1) der Faserwerkstoff im Knick (14) auf Zug beansprucht wird.

2. Nasenhaube nach Anspruch 1, dadurch gekennzeichnet, daß diese mit über dem Umfang verteilten Zugangsöffnungen (12) für Abdeckhülsen (10) versehen ist, welche den Nasenhaubeninnenraum (11) gegenüber den Zugangsöffnungen (12) abdichten.

3. Nasenhaube nach Anspruch 1 oder 2, dadurch gekennzeichnet, daß die äußeren Faserlagen am rotorseitien Ende gestreckt und unter Bildung eines Mantels (9) aerodynamisch am Rotor (2) angepaßt sind.

4. Nasenhaube nach Anspruch 1 bis 3, dadurch gekennzeichnet, daß der Zentrierring (6) radial innen mit einem definierten Zentrierradius (7) versehen ist.

## Claims

1. Fibre composite nose cowl for a turbo drive mechanism having an external shape of a paraboloid of revolution which is connected to the drive mechanism by means of fastening screws, characterised in that the wall of the nose cowl (1) is drawn inwardly at its open end forming a bend (14) and forms a securing flange (5), wherein a metal centring ring (6), which centres the nose cowl (1) on the longitudinal axis of the drive mechanism and simultaneously serves to tension the composite fibre material in the bend (14) if a foreign body strikes the nose cowl (1), is partially radially and axially surrounded by the wall in the area of the bend (14).

2. Nose cowl according to claim 1, characterised in that it is provided with access openings (12) distributed over the periphery for cover sleeves (10) which seal the nose cowl interior (11) with respect to the access openings (12).

3. Nose cowl according to claim 1 or 2, characterised in that the outer fibre layers are extended on the end at the rotor side and forming a casing (9) are adapted aerodynamically to the rotor (2).

4. Nose cowl according to claims 1 to 3, characterised in that the centring ring (6) is provided radially on the inside with a defined centring radius (7).

## Revendications

1. Cône avant en matériau composite pour un turboréacteur, présentant une forme extérieure de paraboloïde de révolution et relié au réacteur par l'intermédiaire de vis de fixation, caractérise en ce qu'à son extrémité ouverte, la paroi du cône avant (1) est ramenée vers l'intérieur en formant un pli (14) et en constituant un flasque de fixation (5), la paroi entourant en partie radialement et axialement, dans la zone du pli (14), un anneau de centrage métallique (6) qui effectue le centrage du cône avant sur l'axe longitudinal du réacteur et qui permet en même temps que dans le cas d'un impact d'un corps étranger sur le cône avant (1), le matériau composite soit sollicité en traction au niveau du pli (14).

2. Cône avant selon la revendication 1, caractérisé en ce que celui-ci est pourvu d'ouvertures d'accès (12) réparties sur la périphérie et destinées à des douilles d'obturation (10) qui rendent étanche l'espace intérieur (11) du cône avant par rapport aux ouvertures d'accès (12).

3. Cône avant selon la revendication 1 ou 2, caractérisé en ce qu'au niveau de l'extrémité côté rotor, les couches extérieures de fibres sont allongées et adaptées de manière aérodynamique au rotor (2) en formant une enveloppe (9).

4. Cône avant selon les revendications 1 à 3, caractérisé en ce que l'anneau de centrage (6) est muni radialement à l'intérieur, d'un rayon de centrage (7) défini.

FIG.1

FIG.2